# EUROPÄISCHE PATENTSCHRIFT

(11) **EP 1 643 843 B1**
(45) Veröffentlichungstag und Bekanntmachung des Hinweises auf die Patenterteilung: **13.06.2007**
(21) Anmeldenummer: 04740659.0
(22) Anmeldetag: 05.07.2004
(51) Int. Cl.: A22C 13/00, B65D 75/66

(54) **HÜLLNETZ FÜR WURST UND VERFAHREN ZU SEINER HERSTELLUNG**
WRAPPING NET FOR SAUSAGES AND METHOD FOR PRODUCTION THEREOF
FILET-ENVELOPPE POUR SAUCISSES ET PROCEDE DE PRODUCTION CORRESPONDANT

(30) Priorität: 16.07.2003 EP 03016155
(43) Veröffentlichungstag der Anmeldung: 12.04.2006
(73) Patentinhaber: Huckfeldt & Thorlichen GmbH & Co., 25436 Tornesch (DE)
(72) Erfinder: HUCKFELDT, Gebhard, Rudolf, 22605 Hamburg (DE); HANISCH, Christian, Ludwig, 25492 Heist (DE)
(74) Vertreter: Glawe, Delfs, Moll
(86) Internationale Anmeldenummer: PCT/EP2004/007327
(87) Internationale Veröffentlichungsnummer: WO 2005/006869

(56) Entgegenhaltungen:
- EP-A- 0 068 233
- DE-A- 2 811 340
- DE-A- 2 940 775
- DE-A- 3 127 444
- US-A- 3 265 286
- US-A- 3 301 687

## Beschreibung

Es ist bekannt, Wurst mit einem Hüllnetz zu umgeben, das aufgrund seiner geknüpften oder gewirkten Struktur in Längsrichtung dehnbar ist. Es ist ursprünglich dazu bestimmt, die Wursthülle vom Fülldruck zu entlasten. Heutzutage nimmt es mehr und mehr Dekorcharakter an. Es wird deshalb nicht nur bei Wurstsorten angewendet, die in einem Reifeprozeß schrumpfen und von denen es daher später leicht abgenommen werden kann, sondern auch für Frischwurst. Schneidet man bei dieser das Hüllnetz längs auf, um es entfernen zu können, schneidet man unvermeidlich auch in die Wurstoberfläche ein, was unerwünscht ist. Zwar ist es bekannt, genähte Wursthüllen mit einem Aufreißfaden innerhalb der Naht zu versehen (DE-U-7807929, DE-A-3725263, DE-A-2811340, DE-A-312744 oder DE-A-29 40 775). Jedoch werden Hüllnetze nahtlos als Schlauch geknüpft oder gewirkt, so daß dort eine Längsnaht, in die man einen Aufreißfaden einlegen könnte, nicht zur Verfügung steht. Auch werden sie endlos hergestellt, so daß der Aufreißfaden in seiner ganzen Länge in das Hüllnetz eingebunden ist und kein herausstehendes Ende vorhanden ist, an dem man ihn fassen könnte.

Der Erfindung liegt die Aufgabe zugrunde, das Öffnen des Hüllnetzes zu erleichtern. Die erfindungsgemäße Lösung liegt darin, daß es mit einem Aufreißfaden versehen ist, dessen Länge größer ist als die des Hüllnetzes im Gebrauchszustand und dermindestens eine Schlaufe bildet, die von der Außenseite her gegriffen werden kann, um den Aufreißvorgang einzuleiten. Ihre Enden sind mit Stellen des Netzes verbunden, die im längs gedehnten Zustand des Netzes einen größeren Abstand voneinander aufweisen als im Gebrauchszustand. Das Netz wird im längs gestreckten Zustand hergestellt. Dadurch hat es im Herstellungszustand eine größere Länge als im Gebrauchszustand. Der Aufreißfaden wird mit einer Länge eingebunden, die der Länge des Netzes bei der Herstellung entspricht. Wenn das Netz danach auf die Länge des Gebrauchs reduziert wird, bildet der Aufreißfaden überall dort Schlaufen, wo er nicht vom Netz festgehalten wird, also in den offenen Netzwaben. Dort kann er gegriffen werden. Das Ergebnis läßt sich demnach so beschreiben, daß der Aufreißfaden im Gebrauchszustand des Hüllnetzes, also insbesondere an der gefüllten Wurst, mindestens eine, vorzugsweise eine Vielzahl von Schlaufen bildet, die von außen zugänglich sind und an denen zum Aufreißen angegriffen werden kann.

Zwar ist es denkbar, den Aufreißfaden einfach innenseitig an das Hüllnetz anzuheften, wie es bei Folienhüllen, bei denen es nicht von außen gegriffen werden kann, bekannt ist (US-A-3265286). Weil die Hüllnetzstränge aber in der Regel ziemlich dick sind, ist es sehr schwer, mit einem so gelegenen Aufreißfaden auf die Stränge des Hüllnetzes eine hinreichende Aufreißwirkung auszuüben. Nach einem wichtigen Merkmal der Erfindung ist daher vorgesehen, daß die Wabenstränge des Netzes, d.h. die Stränge, die die Netzwaben bilden, aus Wirkmaschen zusammengesetzt sind und der Aufreißfaden darin wirktechnisch eingebunden ist. Das bedeutet, daß der Aufreißfaden nicht die gesamte Dicke des Netzstranges zu durchtrennen hat sondern nur einen Teil des Netzstrangs, nämlich nur denjenigen Faden oder diejenigen Fäden, die im Netzstrang außerhalb des Aufreißfadens gelegen sind. Dies ist vorzugsweise nur ein einziger Faden, also nur ein geringer Teil des gesamten Strangquerschnitts. Sobald er unter der Einwirkung des Aufreißfadens durchgerissen ist, löst sich die ihm zugehörige Masche, wodurch der Strang durchtrennt wird.

Dieser Effekt wird leicht erreicht, wenn die Wabenstränge des Hüllnetzes, durch die der Aufreißfaden geführt ist, wirktechnisch als Franse eines Raschel- oder Kettengewirks ausgebildet sind. Dabei kann der Aufreißfaden zwischen einem Paar von Maschenschenkeln und einem Platinenfaden liegen, der sich von einem Maschenfuß einer Masche zum Maschenfuß der nächsten Masche streckt. So läßt sich der Aufreißfaden besonders leicht einbinden. Außerdem läßt sich auf diese Weise besonders leicht erreichen, daß lediglich ein Faden außerhalb des Aufreißfadens liegt, nämlich der Platinenfaden. Falls dieser bei der Herstellung zunächst innerhalb des geraschelten oder kettengewirkten Netzschlauchs liegt, wendet man den Netzschlauch nach der Herstellung.

Damit das Aufreißen nicht dadurch erschwert wird, daß mehrere aufeinanderfolgende, den Aufreißfaden enthaltende Netzstränge am Aufreißfaden entlang rutschen und sich zu einem widerstandsfähigen Bündel zusammenlagern, kann es zweckmäßig sein, sie festzulegen. Dies kann beispielsweise dadurch geschehen, daß sie mit der Wursthülle und/oder dem Aufreißfaden verklebt werden.

Der leichteren Verarbeitbarkeit halber wird das Hüllnetz zweckmäßigerweise mit der zugehörigen Wursthülle fest verbunden, beispielsweise verklebt. Wenn es sich bei der Wursthülle um ein mit einem Dichtungsmittel wie Collagen imprägniertes Gewebe oder Gewirk handelt, kann die Verklebung gleichzeitig mit der Aufbringung dieses Mittels und durch dieses Mittel erfolgen. Wenn das Hüllnetz erst nach der Verfestigung des Mittels aufgebracht wird oder wenn andere Wursthüllen verwendet werden, beispielsweise aus Zellulose oder Kunststoff, erfolgt die Verklebung auf andere Weise unter Zusatz eines geeigneten Klebstoffs.

Nach dem Aufreißen des Netzes soll es im allgemeinen von der Wursthülle entfernt werden. Wenn es sehr fest und ganzflächig mit der Wursthülle verklebt wird, bleiben die nach dem Aufreißen dem Riß benachbarten Ränder des Netzes mit der Wursthülle verbunden und lassen sich schwer zum Entfernen des Netzes greifen. Zweckmäßigerweise bleiben deshalb die dem Aufreißfaden benachbarten Bereiche des Netzes zumindest teilweise mit der Wursthülle unverklebt. Am einfachsten ist es, wenn ein dem Aufreißfaden benachbarter Bereich, beispielsweise beide dem Aufreißfaden benachbarten Randstreifen unverklebt bleiben oder weniger stark verklebt werden als außerhalb dieses Bereichs. Es genügt im allgemeinen, wenn nur ein Randstreifen ganz oder teilweise unverklebt bleibt. Die Breite dieses Randstreifens wird einerseits so groß bemessen, daß er sich gut greifen läßt, aber andererseits so schmal, daß die einheitliche Handhabbarkeit der Wursthülle mit dem Netz nicht beeinträchtigt wird. Im allgemeinen genügt es, wenn auf beiden Seiten oder auf einer Seite des Aufreißfadens ein Rand mit der Breite von einer oder zwei Maschen verklebungsfrei bleibt. Das Netz oder die Wursthülle kann in demjenigen Bereich, in dem die Verklebung verhindert werden soll, mit einem Material beschichtet oder imprägniert sein, das sich verklebungshindernd auswirkt, beispielweise mit einem Wachs.

Statt dessen oder zusätzlich kann die folgend beschriebene Maßnahme ergriffen werden, die das Greifen und Lösen des Netzes von der Wurst nach dem Aufreißen erleichtert. Innerhalb eines dem Aufreißfaden benachbarten Bereichs wird für das Netz ein Material verwendet, daß dehnfähiger ist als das außerhalb dieses Bereichs verwendete Material. Beispielsweise wird ein Garn verwendet, dessen Reißdehnung größer als 20%, vorzugsweise größer als 30%, ist oder die um mindestens das Zweifache, vorzugsweise das Dreifache, größer ist als die Reißdehnung des außerhalb des Bereichs verwendeten Garns. Alternativ wird innerhalb des dem Aufreißfaden benachbarten Bereichs ein Garn verwendet, das entsprechend dehnfähiger ist als die Wursthülle. Die Wirkung dieser Maßnahmen besteht darin, daß das Garn in diesem Bereich beim Aufreißen unter der dabei ausgeübten Kraft sich dehnt und sich dabei von der Wursthülle löst.

Beim Füllen der Wursthülle kann die Verbindung zwischen dem Hüllnetz und der Wursthülle starken Reibkräften ausgesetzt sein, die vornehmlich in Längsrichtung wirken. Dadurch ist insbesondere die Verbindung zwischen den quer verlaufenden Strängen des Hüllnetzes mit der Wursthülle betroffen. Es kann daher zweckmäßig sein, dafür zu sorgen, daß außer solchen quer verlaufenden Netzsträngen auch solche vorhanden sind, die in Längsrichtung verlaufen, und daß hauptsächlich diese für die Verklebung des Hüllnetzes mit der Wursthülle herangezogen werden. Die Verklebung kann sich sogar auf diese in Längsrichtung verlaufenden Netzstränge beschränken oder bei diesen zumindest sicherer oder häufiger oder großflächiger ausgebildet sein als im Bereich der quer verlaufenden Netzstränge.

Bei dem fertigen Produkt, an welchem das Hüllnetz - im allgemeinen gemeinsam mit der Wursthülle - an den Enden verschlossen ist, soll nach der Erfindung der Aufreißfaden gleichfalls in den Endverschlüssen gesichert sein, damit er beim Aufreißen unter der auf ihn wirkenden Kraft sich nicht herausziehen läßt.

Die Erfindung bezieht sich vornehmlich auf Wurst und ähnliche Lebensmittel, die in einem Hüllschlauch mit Endverschlüssen verpackt werden. Sie ist jedoch nicht darauf beschränkt.

Die Erfindung wird im folgenden näher unter Bezugnahme auf die Zeichnung erläutert, die ein vorteilhaftes Ausführungsbeispiel veranschaulicht. Es zeigen:
- Fig. 1: die Gesamtansicht einer mit Hüllnetz und Aufreißfaden versehenen Wurst,
- Fig. 2: eine vergrößerte Teilansicht des Hüllnetzes mit Aufreißfaden,
- Fig. 3 und 4: verschiedene Maschenbilder eines Netzstrangs mit Aufreißfaden und
- Fig. 5: den Vorgang des Aufreißens.

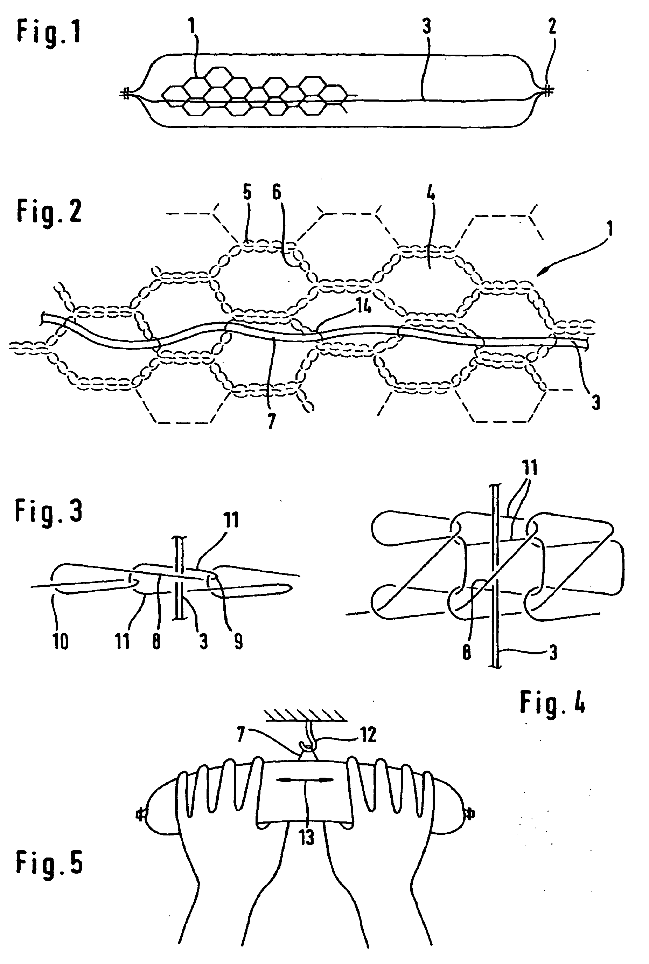

Die Wurst gemäß Fig. 1 ist in einer Wursthülle enthalten, die außen von einem Hüllnetz 1 dicht umgeben ist. An den Enden sind die Wursthülle und das Netz 1 gemeinsam beispielsweise durch Clips 2 verschlossen. In die Clips ist auch ein Aufreißfaden 3 zugfest eingebunden, der in dem Hüllnetz 1 längs durchlaufend vorgesehen ist.

Das Hüllnetz 1 besteht aus Waben 4, die von Längssträngen 5 und Quersträngen 6 gebildet sind. Es handelt sich vorzugsweise um ein als Schlauch hergestelltes Raschel- oder Kettengewirk, bei dem die quer verlaufenden Stränge 6 als Franse (Luftmaschen) und die längs verlaufenden Stränge 5 als Trikot gewirkt sind. Die längs verlaufenden Stränge 5 umfassen zweckmäßigerweise mehrere (beispielsweise 5) Maschen, damit sie eine gewisse Längsausdehnung haben und dadurch hinreichende Fläche für eine Klebverbindung mit der darunter liegenden Wursthülle zur Verfügung stellen.Die quer verlaufenden Stränge 6 können einmaschig (Fig. 3) oder auch mehrmaschig (Fig. 4 dreimaschig) ausgebildet sein. In jedem Fall liegt der Aufreißfaden 3 zweckmäßigerweise zwischen dem Platinenfaden 8, der vom Fuß 9 einer Masche durchläuft zum Kopf 10 der nächsten Masche, einerseits und den Schenkeln 11 einer Masche andererseits. Dabei soll der Platinenfaden 8 auf der Außenseite des Gewirks liegen, damit nur er vom Aufreißfaden 3 zerrissen zu werden braucht. Danach löst sich die zugehörige Masche insgesamt auf.

Wenn der Aufreißfaden 3 durch sämtliche in einer Reihe hintereinander liegenden Querstränge geführt ist, wird auf diese Weise das Hüllnetz in seiner Gesamtheit aufgerissen und kann leicht von der Wurst entfernt werden. Diese kann danach leicht in gewohnter Weise gepellt werden. Der Aufreißvorgang wird erleichtert, wenn der Aufreißfaden mit den ihn aufnehmenden Maschen verklebt oder in anderer Weise so verbunden ist, daß keine Masche am Aufreißfaden entlanggleiten und sich mit der nächsten Masche zusammenlegen kann. Dasselbe Ziel wird durch die schiebefeste Verbindung der Masche oder des sie enthaltenden Strangs mit der Wursthülle erreicht.

Obgleich der Aufreißfaden 3 zweckmäßigerweise durch Maschen der quer verlaufenden Stränge geführt ist, kann sie statt dessen auch durch einen längs verlaufenden Wabenstrang 5 geführt sein. Das gilt insbesondere dann, wenn dieser nur eine oder wenige Maschen enthält.

Hergestellt wird das Hüllnetz in längs gestrecktem Zustand. Die den Aufreißfaden aufnehmenden und im Gebrauchszustand (Fig. 2) mit einer beträchtlichen Querkomponente verlaufenden Querstränge 6 sind dann mehr oder weniger in Längsrichtung orientiert. Die den Aufreißfaden 3 aufnehmenden Maschen aufeinanderfolgender Querstränge sind dann weiter voneinander entfernt als im Gebrauchszustand. Wird das Netz danach in den Gebrauchszustand überführt, verkürzt sich das Netz, während der Aufreißfaden 3 seine Länge beibehält und zwischen den ihn aufnehmenden Quersträngen 6 Schlaufen bildet, die von außen zugänglich sind und zum Aufreißen gegriffen werden können.

Da die Fäden des Hüllnetzes schon aus optischen Gründen ziemlich dick sind, kann das Aufreißen des Netzes trotz der durch die Erfindung erreichten Erleichterung einen beträchtlichen Kraftaufwand erfordern. Dieser fällt leichter, wenn man gemäß Fig. 5 verfährt. Eine Schlaufe 7 des Aufreißfadens im Mittelbereich der Wurst wird in einen ortsfesten Haken 12 eingehängt und danach die mit beiden Händen gegriffene Wurst kräftig in Pfeilrichtung 13 einmal zur einen und dann zur anderen Seite bewegt.

## Patentansprüche

1. Schlauchförmiges Hüllnetz für Wurst und dergleichen, das eine in Längsrichtung dehnbare Struktur aufweist, **dadurch gekennzeichnet, daß** es einen längs verlaufenden Aufreißfaden (3) aufweist, dessen Länge größer ist als die des im Gebrauchszustand befindlichen Hüllnetzes (1) und mindestens eine auf der Außenseite des Hüllnetzes greifbare Schlaufe (7) bildet, deren Enden (14) mit Stellen (8) des Hüllnetzes (1) verbunden sind, die im längs gedehnten Zustand des Hüllnetzes (1) einen größeren Abstand voneinander als in dessen Gebrauchszustand aufweisen.

2. Hüllnetz nach Anspruch 1 **dadurch gekennzeichnet, daß** das Hüllnetz (1) Wabenstränge (5, 6) umfaßt, die aus Wirkmaschen (8, 9, 10, 11) zusammengesetzt sind und der Aufreißfaden darin eingebunden ist.

3. Hüllnetz nach Anspruch 2 **dadurch gekennzeichnet, daß** die Wabenstränge (5, 6) des Hüllnetzes (1) teils als Fransen gewirkt sind und der Aufreißfaden (3) in die Fransen eingebunden ist.

4. Hüllnetz nach Anspruch 3 **dadurch gekennzeichnet, daß** der Aufreißfaden (3) zwischen einem Paar von Maschenschenkeln (11)und einem Platinenfaden (8) liegt.

5. Hüllnetz nach Anspruch 4 **dadurch gekennzeichnet, daß** der Platinenfaden (8) auf der Außenseite des Hüllnetzes (1) liegt.

6. Hüllnetz nach einem der Ansprüche 2 bis 5 **dadurch gekennzeichnet, daß** die den Aufreißfaden (3) enthaltenden Hüllnetzstränge (5 oder 6) mit der zugehörigen Wursthülle und/oder dem Aufreißfaden (3) verklebt sind.

7. Hüllnetz nach Anspruch 6, **dadurch gekennzeichnet, daß** das Hüllnetz in der Nachbarschaft des Aufreißfadens (3) nicht mit der Wursthülle () verklebt ist.

8. Hüllnetz nach Anspruch 6 oder 7, **dadurch gekennzeichnet, daß** es in einem dem Aufreißfaden benachbarten Bereich aus einem dehnfähigeren Material als außerhalb dieses Bereichs besteht.

9. Verfahren zum Herstellen eines Netzschlauchs durch Wirken oder Knüpfen, der im Herstellungszustand eine größere Länge als im Gebrauchszustand hat, **dadurch gekennzeichnet, daß** bei der Herstellung ein Aufreißfaden (3) eingearbeitet wird, den man während der Verkürzung des Hüllnetzes (1) im Übergang zum Gebrauchszustand zwischen mindestens zwei Stellen, an denen er mit dem Hüllnetz verbunden ist, eine von außen zugängliche Schlaufe bilden läßt.

10. Verfahren nach Anspruch 7 **dadurch gekennzeichnet, daß** das Hüllnetz als Raschel- oder Kettengewirk hergestellt und der Aufreißfaden in Wirkmaschen eingelegt wird.

11. Verfahren nach Anspruch 8 **dadurch gekennzeichnet, daß** er in je eine Masche aller Fransen (6) von aufeinander folgenden Netzwaben(4) eingelegt wird.

12. Verfahren nach einem der Ansprüche 7 bis 9 **dadurch gekennzeichnet, daß** der Aufreißfaden (3)zwischen die Maschenschenkel (11) und den zugehörigen Platinenfaden (8) eingelegt wird.

13. Verfahren nach Anspruch 10 **dadurch gekennzeichnet, daß** das Gewirk anschließend gewendet wird, falls der Platinenfaden (8) bei der Herstellung innen liegt.

14. Verfahren nach einem der Ansprüche 8 bis 12, **dadurch gekennzeichnet, daß** das Hüllnetz mit der Wursthülle verklebt wird.

15. Verfahren nach Anspruch 13, **dadurch gekennzeichnet, daß** das Hüllnetz in einem dem Aufreißfaden benachbartena Bereich nicht oder weniger als außerhalb dieses Bereichs mit der Wursthülle verklebt wird.

16. Verfahren nach Anspruch 14, **dadurch gekennzeichnet, daß** das Hüllnetz und/oder die Wursthülle vor ihrer Verbindung in einem dem Aufreißfaden zumindest auf einer Seite benachbarten Bereich verklebungshindernd imprägniert wird.

17. Verfahren nach einem der Ansprüche 1 bis 15, **dadurch gekennzeichnet, daß** innerhalb eines dem Aufreißfaden benachbarten Bereichs ein dehnfähigeres Material für das Netz verwendet wird als außerhalb dieses Bereichs.

18. Wursthülle, die mit einem Hüllnetz (1) nach einem der Ansprüche 1 bis 6 verbunden ist.

19. Wursthülle nach Anspruch 17 **dadurch gekennzeichnet, daß** das Hüllnetz (1) mit der Wursthülle verklebt ist.

20. Wursthülle nach Anspruch 18, **dadurch gekennzeichnet, daß** das Hüllnetz (1) in einem dem Aufreißfaden benachbarten Bereich nicht oder weniger als außerhalb dieses Bereichs mit der Wursthülle verklebt ist.

21. Wursthülle nach Anspruch 17, **dadurch gekennzeichnet, daß** das Hüllnetz in einem dem Aufreißfaden benachbarten Bereich aus einem dehnfähigeren Material besteht als außerhalb dieses Bereichs.

22. Wursthülle nach Anspruch 13 **dadurch gekennzeichnet, daß** das gewirkte Hüllnetz in Längsrichtung verlaufende, als Trikot ausgebildete Wabenstränge 5 aufweist und die Verklebung mit der Wursthülle im Bereich dieser längs verlaufenden Wabenstränge (5) sicherer oder häufiger oder großflächiger ist als im Bereich der quer verlaufenden Wabenstränge (6).

23. Wurst oder dergleichen mit einer an den Enden verschlossenen Wursthülle, **dadurch gekennzeichnet, daß** sie von einem Hüllnetz (1) gemäß einem der Ansprüche 1 bis 6 oder einer Wursthülle nach einem der Ansprüche 12 bis 14 umhüllt ist und die Enden des Aufreißfadens (3) in den Endverschlüssen (2) der Wursthülle gesichert sind.

## Claims

1. A tubular encasing netting for sausage and the like, which has a structure which is extendible in the longitudinal direction, wherein said encasing netting has a longitudinally running tear-open thread (3), the length of which is greater than that of the encasing, netting (1) which is in the state of use and forms at least one loop (7) capable of being grasped on the outside of the encasing netting, the ends (14) of the loop (7) are connected to points (8) of the encasing netting (1) which are at a greater distance from one another in the longitudinally extended state of the encasing netting (1) than in its state of use.

2. The netting as claimed in claim 1, wherein the encasing netting (1) comprises honeycomb strands (5, 6) which are composed of knitting stitches (8, 9, 10, 11), and the tear-open thread is bound into these.

3. The netting as claimed in claim 2, wherein the honeycomb strands (5, 6) of the encasing netting (1) are knitted partially as fringes, and the tear-open thread (3) is bound into the fringes.

4. The netting as claimed in claim 3, wherein the tear-open thread (3) lies between a pair of stitch legs (11) and a.sinker thread (8).

5. The netting as claimed in claim 4, wherein the sinker thread (8) lies on the outside of the encasing netting (1).

6. The netting as claimed in one of claims 2 to 5, wherein the encasing netting strands (5 or 6) containing the tear-open thread (3) are adhesively bonded to the associated sausage casing and/or to the tear-open thread (3).

7. The encasing netting as claimed in claim 6, wherein the encasing netting is not adhesively bonded to the sausage casing in the vicinity of the tear-open thread (3).

8. The encasing netting as claimed in claim 6 or 7, which consists of a more elongatable material in a region adjacent to the tear-open thread than outside this region.

9. A method for producing a netting tube by knitting or tying, which-has a greater length in the production state than in the state of use, wherein, during production, a tear-open thread (3) is worked in, which, during the shortening of the encasing netting (1) at the transition to the state of use, is caused to form, between at least two points at which it is connected to the encasing netting, a loop which is accessible from outside.

10. The method as claimed in claim 7, wherein the encasing netting is produced as a double-rib or warp-knit fabric, and the tear-open thread is inserted into knitting stitches.

11. The method as claimed in claim 8, wherein it is inserted in each case into a stitch of all the fringes (6) of successive netting honeycombs (4).

12. The method as claimed in one of claims 7 to 9, wherein the tear-open thread (3) is inserted between the stitch legs (11) and the associated sinker thread (8).

13. The method as claimed in claim 10, wherein the fabric is subsequently reversed, if the sinker thread (8) lies on the inside during production.

14. The method as claimed in one of claims 8 to 12, wherein the encasing netting is adhesively bonded to the sausage casing.

15. The method as claimed in claim 13, wherein, in a region adjacent to the tear-open thread, the encasing netting is not adhesively bonded or is bonded to a lesser extent to the sausage casing than outside this region.

16. The method as claimed in claim 14, wherein the encasing netting and/or the sausage casing, before being connected, is impregnated in a bond-inhibiting manner in a region adjacent to the tear-open thread at least on one side.

17. The method as claimed in one of claims 1 to 15, wherein a more elongatable material is used for the netting within a region adjacent to the tear-open thread than outside this region.

18. A sausage casing which is connected to an encasing netting (1) as claimed in one of claims 1 to 6.

19. The sausage casing as claimed in claim 17, wherein the encasing netting (1) is adhesively bonded to the sausage casing.

20. The sausage, casing as claimed in claim 18, wherein, in a region adjacent to the tear-open thread, the encasing netting (1) is not adhesively bonded or is adhesively bonded to a lesser extent to the sausage casing than outside this region.

21. The sausage casing as claimed in claim 17, wherein the encasing netting consists of a more elongatable material in a region adjacent to the tear-open thread than outside this region.

22. The sausage casing as claimed in claim 13, wherein the knitted encasing netting has honeycomb strands (5) running in the longitudinal direction and designed as a tricot, and adhesive bonding to the sausage casing is more secure or more frequent or over a larger area in the region of these longitudinally running honeycomb strands (5) than in the region of the transversely running honeycomb strands (6).

23. A sausage or the like with a sausage casing closed at the ends, wherein said sausage is encased by an encasing netting (1) as claimed in one of claims 1 to 6 or by a sausage casing as claimed in one of claims 12 to 14 and the ends of the tear-open thread (3) are secured in the end closures (2) of the sausage casing.

## Revendications

1. Filet enveloppant tubulaire pour saucisse et produits similaires, qui comporte une structure extensible dans le sens longitudinal, **caractérisé en ce qu'**il comporte des fils de déchirage (3), qui sont orientés dans le sens longitudinal et dont la longueur est supérieure à celle du filet enveloppant (1) à l'état d'utilisation, et qui forme au moins une boucle (7), qui peut être saisie sur le côté extérieur du filet enveloppant et dont les extrémités (14) sont reliées à des emplacements (8) du filet enveloppant (1), qui présentent entre eux, à l'état étiré dans le sens longitudinal du filet enveloppant (1), une plus grande distance qu'à l'état d'utilisation de celui-ci.

2. Filet enveloppant selon la revendication 1, **caractérisé en ce que** le filet enveloppant (1) comporte des boyaux en nids d'abeille (5, 6) qui sont formés par des mailles tricotées (8, 9, 10, 11) et dans lesquels est intégré le fil de déchirage.

3. Filet enveloppant selon la revendication 2, **caractérisé en ce que** les boyaux en nids d'abeille (5, 6) du filet enveloppant (1) sont tricotés en partie sous forme de franges et le fil de déchirage (3) est intégré dans les franges.

4. Filet enveloppant selon la revendication 3, **caractérisé en ce que** le fil de déchirage (3) est situé entre une paire de branches de maille (11) et un fil de platine (8).

5. Filet enveloppant selon la revendication 4, **caractérisé en ce que** le fil de platine (8) est situé sur le côté extérieur du filet enveloppant (1).

6. Filet enveloppant selon l'une quelconque des revendications 2 à 5, **caractérisé en ce que** les boyaux du filet (5 ou 6) contenant le fil de déchirage (3) sont collés avec l'enveloppe associée de la saucisse et/ou le fil de déchirage (3).

7. Filet enveloppant selon la revendication 6, **caractérisé en ce que** le filet enveloppant n'est pas collé à l'enveloppe de saucisse à proximité du fil de déchirage (3).

8. Filet enveloppant selon la revendication 6 ou 7, **caractérisé en ce que**, dans la zone adjacente au fil de déchirage, ledit filet est réalisé dans un matériau plus extensible qu'en dehors de cette zone.

9. Procédé de réalisation d'un filet tubulaire par tricotage ou nouage, dont la longueur est plus grande à l'état de fabrication qu'à l'état d'utilisation, **caractérisé en ce qu'**un fil de déchirage (3) y est intégré lors de la fabrication, lequel, pendant le raccourcissement du filet enveloppant (1) au moment de la transition vers l'état d'utilisation, forme une boucle accessible de l'extérieur entre au moins deux emplacements au niveau desquels il est relié au filet enveloppant.

10. Procédé selon la revendication 7, **caractérisé en ce que** le filet enveloppant est réalisé sous forme de tricot rachel ou tricot à mailles jetées et le fil de déchirage est inséré dans des mailles tricotées.

11. Procédé selon la revendication 8, **caractérisé en ce qu'**il est inséré dans chaque maille de toutes les franges (6) de nids d'abeille (4) successifs.

12. Procédé selon l'une quelconque des revendications 7 à 9, **caractérisé en ce que** le fil de déchirage (3) est inséré entre les branches des mailles (11) et les fils de platine (8) associés.

13. Procédé selon la revendication 10, **caractérisé en ce que** le tricot est retourné ensuite, au cas où les fils de platine (8) sont situés à l'intérieur pendant la fabrication.

14. Procédé selon l'une quelconque des revendications 8 à 12, **caractérisé en ce que** le filet enveloppant est collé à l'enveloppe de la saucisse.

15. Procédé selon la revendication 13, **caractérisé en ce que**, dans une zone à proximité du fil de déchirage, le filet enveloppant n'est pas collé ou est moins collé qu'à l'extérieur de cette zone avec l'enveloppe de la saucisse.

16. Procédé selon la revendication 14, **caractérisé en ce que** le filet enveloppant et/ou l'enveloppe de la saucisse, avant leur assemblage, sont imprégnés de manière à empêcher le collage dans une zone adjacente au moins sur un côté au fil de déchirage.

17. Procédé selon l'une quelconque des revendications 1 à 15, **caractérisé en ce que**, à l'intérieur d'une zone adjacente au fil de déchirage, on utilise pour le filet un matériau plus extensible qu'à l'extérieur de cette zone.

18. Enveloppe de saucisse qui est assemblée à un filet enveloppant (1) selon l'une quelconque des revendications 1 à 6.

19. Enveloppe de saucisse selon la revendication 17, **caractérisée en ce que** le filet enveloppant (1) est collé à l'enveloppe de la saucisse.

20. Enveloppe de saucisse selon la revendication 18, **caractérisée en ce que** le filet enveloppant (1), dans une zone adjacente au fil de déchirage, n'est pas collée ou est moins collée à l'enveloppe de la saucisse qu'à l'extérieur de cette zone.

21. Enveloppe de saucisse selon la revendication 17, **caractérisée en ce que** le filet enveloppant, dans une zone adjacente au fil de déchirage, est réalisé dans un matériau plus extensible qu'à l'extérieur de cette zone.

22. Enveloppe de saucisse selon la revendication 13, **caractérisée en ce que** le filet enveloppant tricoté comporte des boyaux en nids d'abeille (5), orientés dans le sens longitudinal et réalisés sous forme de tricot, et le collage avec l'enveloppe de la saucisse dans la zone de ces boyaux en nids d'abeille (5) orientés dans le sens longitudinal est plus sûr ou plus fréquent ou réalisé sur une plus grande surface que dans la zone des boyaux en nids d'abeille (6) orientés transversalement.

23. Saucisse ou produit similaire comportant une enveloppe de saucisse fermée aux deux extrémités, **caractérisée en ce qu'**elle est enveloppée d'un filet enveloppant (1) selon l'une quelconque des revendications 1 à 6 ou d'une enveloppe de saucisse selon l'une quelconque des revendications 12 à 14, et les extrémités du fil de déchirage (3) sont bloquées dans les fermetures frontales (2) de l'enveloppe de saucisse.
